# EUROPEAN PATENT APPLICATION

(11) **EP 3 249 068 A1**
(43) Date of publication of application: **29.11.2017**
(21) Application number: 16740178.5
(22) Date of filing: 19.01.2016
(51) Int. Cl.: C22C 38/00, C22C 38/28, F16C 33/62, C21C 7/06, C21D 1/32, C21D 8/06

(54) **STEEL MATERIAL FOR BEARINGS THAT HAS EXCELLENT ROLLING FATIGUE CHARACTERISTICS, AND BEARING PART**

(30) Priority: 23.01.2015 JP 2015011560
(71) Applicant: Kabushiki Kaisha Kobe Seiko Sho (Kobe Steel, Ltd.), Kobe-shi, Hyogo 651-8585 (JP)
(72) Inventor: SHIMAMOTO Masaki, Hyogo 651-2271 (JP); KIMURA Sei, Hyogo 675-0137 (JP); OHTA Hiroki, Hyogo 675-0137 (JP); IWASAKI Katsuhiro, Hyogo 657-0863 (JP); OWAKI Akihiro, Hyogo 657-0863 (JP); SUGIMURA Tomoko, HYogo 651-2271 (JP)
(74) Representative: Müller-Boré & Partner Patentanwälte PartG mbB
(86) International application number: PCT/JP2016/051470
(87) International publication number: WO 2016/117571

(57) **Abstract**

This steel material for bearings includes prescribed components in the steel, the oxide inclusions in the steel that have a minor axis of 1 µm or greater satisfying the following conditions (1) and (2). (1) The average composition contains specific respective amounts of CaO, Al₂O₃, SiO₂, and TiO₂, and CaO + Al₂O₃ + SiO₂ + TiO₂ ≥ 60%. (2) The proportion of oxide inclusions in which TiN occurs at the interface of the oxide inclusions and the steel is 30% or more of the total of the oxide inclusions.

## Description

### Technical Field

The present invention relates to a bearing steel material with excellent rolling contact fatigue properties and to a bearing part. Particularly, the present invention relates to a bearing steel material providing excellent rolling contact fatigue properties when used as rolling elements for bearings, such as rollers, needles, balls and races to be used in various industrial machines, automobiles, etc., and to a bearing part obtained from such a bearing steel material.

### Background Art

Rolling elements for bearings used in the fields of various industrial machines, automobiles, etc. undergo high repeated stress from the radial direction (direction perpendicular to the axis of the rolling element). Accordingly, the rolling elements for bearings are required to have excellent rolling contact fatigue properties. The demands for the rolling contact fatigue properties have become more stringent year after year in response to the trend of increasing the performance and reducing the weight in the industrial machines, and bearing steel materials are required to have better rolling contact fatigue properties in order to further improve the durability of bearing parts.

It has hitherto been considered that the rolling contact fatigue properties intensely correlate with the number density of oxide inclusions formed in a steel, mainly, hard oxide inclusions such as Al₂O₃ formed when an Al deoxidized steel is used and that the rolling contact fatigue properties are improved by reducing the number density of the hard oxide inclusions. Accordingly, it was attempted to improve the rolling contact fatigue properties by decreasing the oxygen content in the steel in the steel making process.

In recent years, however, a study has been progressed on the relation between the rolling contact fatigue properties and the non-metallic inclusions typically represented by oxide inclusions, and it has been found that there is not always a correlation between the number density of the oxide inclusions and the rolling contact fatigue properties. That is, it has been revealed that the rolling contact fatigue properties are in a close correlation with the size of the non-metallic inclusions, for example, the square root of the area of the non-metallic inclusions, and that for improving the rolling contact fatigue properties, it is more effective to decrease the size of the non-metallic inclusions than to reduce the number density of the non-metallic inclusions.

Then, instead of using the Al deoxidized steel as usual, there has been proposed a method of improving the rolling contact fatigue properties by suppressing the Al content in the steel as much as possible and forming a Si deoxidized steel to control the composition of formed oxides to a composition mainly including SiO₂, CaO, etc. instead of the composition mainly including Al₂O₃, thereby elongating and segmenting the non-metallic inclusions in the rolling step to decrease the size of the non-metallic inclusions.

For example, Patent Literature 1 proposes a bearing steel material in which an average composition of oxides includes, on the mass% basis, 10 to 60% of CaO, 20% or less of Al₂O₃, 50% or less of MnO, 15% or less of MgO, and the balance of SiO₂ and impurities, in which the value for the arithmetic mean of the maximum thickness of the oxides and the value for the arithmetic mean of the maximum thickness of sulfides present in an area of 100 mm² at 10 locations of the vertical cross section in the longitudinal direction of the steel material are each 8.5 µm or less.

Further, Patent Literature 2 discloses a Si deoxidized steel material at high cleanliness containing a predetermined amount of ZrO₂ as an oxide component not known so far in the oxide inclusions described in Patent Literature 1.

Furthermore, Patent Literature 3 describes a spring steel having excellent fatigue resistance in which an adverse influence of harmful inclusions of alumina, TiN and MnS is removed by controlling the formation of REM inclusions, and a production method thereof. Particularly, the above-mentioned Patent Literature 3 describes a method of modifying alumina to REM-Al-O-S inclusions, thereby being able to prevent coarsening, fixing S as the REM-Al-O-S inclusions, thereby suppressing coarse MnS, and further compounding TiN with the REM-Al-O-S inclusions, thereby decreasing the number density of harmful TiN.

In addition, Patent Literature 4 is a technique disclosed by the present applicant. Particularly, the above-mentioned Patent Literature 4 describes that crystallization of the above-mentioned oxide inclusions can be suppressed by containing TiO₂ in oxide inclusions obtained by Si deoxidization, which suppresses voids from being formed at an interface between a steel as a matrix and the oxide inclusions to obtain a bearing steel material having extremely excellent rolling contact fatigue properties.

### Citation List

### Patent Literatures

Patent Literature 1: JP-A-2009-30145
Patent Literature 2: JP-A-2010-202905
Patent Literature 3: JP-A-2013-108171
Patent Literature 4: JP-A-2014-25083

### Summary of the Invention

### Technical Problems

However, in the above-mentioned Patent Literature 1, it cannot be said that sufficient rolling contact fatigue properties can be obtained, since a countermeasure for suppressing the voids is not taken, for the voids at the interface between the steel and the oxide inclusions.

Also the Patent Literature 2 does not describe the voids formed by peeling of the above-mentioned interface at all. In the first place, this is a technique focusing only on the refinement of the entire non-metallic inclusions, and also in the evaluation of examples, it is only evaluated by the value of arithmetic mean for the evaluation score of C-based inclusions according to the ASTM E45 method. Accordingly, the steel material manufactured as described above does not always provide excellent rolling contact fatigue properties.

Further, in the above-mentioned Patent Literature 3, since the oxide inclusions are composed of strong deoxidizing elements such as REM and Al, and not mainly composed of a weak deoxidizing element such as Si, it is impossible to suppress the occurrence of peeling at the interface between the oxide inclusions and the steel.

Improvement of the rolling contact fatigue properties in the bearing steel material is strongly required, and also in the bearing steel material of the above-mentioned Patent Literature 4, further improvement of the rolling contact fatigue properties has been desired.

The present invention has been accomplished in view of the situations described above, and an object thereof is to provide a novel bearing steel material that is extremely excellent in rolling contact fatigue properties and capable of suppressing early peeling.

### Solution to Problem

A gist of the bearing steel material excellent in rolling contact fatigue properties, which could solve the above problem(s) resides in containing, on the mass% basis: from 0.8 to 1.1% of C; from 0.15 to 0.8% of Si; from 0.1 to 1.0% of Mn; from 1.3 to 1.8% of Cr; more than 0% and 0.05% or less of P; more than 0% and 0.015% or less of S; from 0.0002 to 0.005% of Al; from 0.0002 to 0.002% ofCa; from 0.0005 to 0.010% of Ti; from 0.0030% to 0.010% of N; more than 0% and 0.0030% or less of O; and the balance being iron and unavoidable impurities, wherein oxide inclusions having a minor diameter of 1 µm or more contained in a steel satisfy the following requirements (1) and (2):
(1) an average composition thereof contains, on the mass% basis, from 10 to 50% of CaO, from 10 to 50% of Al₂O₃, from 20 to 70% of SiO₂, from 1.0 to 40% of TiO₂ and the balance being impurities, and satisfies CaO+Al₂O₃+SiO₂+TiO₂≥60%; and
(2) a number ratio of oxide inclusions in which TiN is formed at an interface between the oxide inclusions and the steel is 30% or more based on a whole of the oxide inclusions.

In a preferred example of the present invention, an average of an aspect ratio (major diameter/minor diameter) of the oxide inclusions present on a surface cross sectioned in parallel with a longitudinal direction of the steel material is restricted to 3.0 or less.

In the present invention, a bearing part which is formed of the bearing steel material is also included within the scope of the present invention.

### Advantageous Effects of the Invention

According to the present invention, since the chemical component composition of the steel material and the composition of the oxide inclusions contained in the steel are appropriately controlled, the bearing steel material highly excellent in the rolling contact fatigue properties and capable of suppressing early peeling can be provided. Such a bearing steel material is useful not only as a material of bearing parts to which load is repetitively applied mainly in a radial direction, such as rollers, needles and balls, but also as a material for bearing parts to which load is repetitively applied also in a thrust direction, such as races, and the rolling contact fatigue properties can be stably improved, irrespective of the direction to which the load is applied.

### Description of Embodiments

After the disclosure of the above-mentioned Patent Literature 4, the present inventors have further made studies in order to provide a bearing steel material having more excellent rolling contact fatigue properties. As a result, it has become clear that when TiN is formed at an interface between oxide inclusions obtained by Si deoxidization and a steel, adhesion at the interface is improved to suppress voids, resulting in more improvement in the rolling contact fatigue properties. Further, in order to form the above-mentioned predetermined ratio of TiN, it has been found that the retention time during heating performed, for example, before blooming, blooming forging, hot rolling, etc. may be controlled to be somewhat longer than before, thus leading to completion of the present invention.

Details of arriving at the present invention will be described below specifically with reference to the above-mentioned Patent Literature 4 and further the above-mentioned Patent Literature 3.

Similarly to the above-mentioned Patent Literature 4, for the purpose of "providing a Si deoxidized steel material for a bearing, which can stably improve rolling contact fatigue properties, irrespective of the direction to which load is applied without performing Al deoxidizing treatment, thereby being capable of suppressing early peeling", the present inventors have made studies from the viewpoint of providing a Si deoxidized steel material more excellent in a level of rolling contact fatigue properties than in the above-mentioned Patent Literature 4.

It has been known that oxide inclusions obtained by Si deoxidization are liable to become amorphous and easily elongated by hot rolling, etc. Accordingly, anisotropy is generated in the oxide inclusions. As a result, anisotropy is generated also in the rolling contact fatigue properties of the steel material. This is therefore undesirable. On the other hand, it is also possible to crystallize the oxide inclusions in a high temperature region of hot working, etc. by controlling the composition thereof to form polycrystals. However, since the oxide inclusions in the form of the polycrystals have high deformation resistance, as compared to the steel as the matrix, voids are liable to be formed at the interface between the steel (matrix) and the oxide inclusions during hot working or cold working. Since the voids formed at the interface adversely affect on the rolling contact fatigue properties, they are undesirable.

Then, the present inventors have made intensive studies on a method of suppressing the formation of the voids by controlling not only the composition of the above-mentioned oxide inclusions obtained by the Si deoxidization, but also the state of TiN formation. As a result, it has been found that when TiN is formed in a predetermined amount at the interface between the above-mentioned oxide inclusions obtained by the Si deoxidization and the steel as the matrix, peeling of the above-mentioned interface can be suppressed, thereby extremely improving the rolling contact fatigue properties.

With respect to TiN, as shown in the Patent Literature 3 described above, many reports of being harmful to fatigue properties have been made. However, all of the above-mentioned reports relate to TiN formed in an Al deoxidized steel as described in the Patent Literature 3. That is, in the case of the Al deoxidized steel, since deoxidized products of Al₂O₃, etc. [in addition, including MgO·Al₂O₃, (Ca, Al)-based oxides, etc.] are formed as solid phases in a molten steel, TiN is liable to be formed using the above-mentioned deoxidized products as forming nuclei. Further, since Al₂O₃, etc. are aggregated in the molten steel and are liable to be coarsened, TiN formed on Al₂O₃, etc. also tends to be coarsened. As a result, the above-mentioned deoxidized products of Al₂O₃, etc. and compound inclusions composed of TiN tend to be coarsened, which is considered to adversely affect on the rolling contact fatigue properties. Further, in order to cover a large portion of coarsened Al₂O₃, etc. with TiN, it is required to form a large amount of TiN. This rather causes coarsening of the compound inclusions to adversely affect on the rolling contact fatigue properties. Furthermore, since peeling occurs at the interface between the oxide inclusions of Al₂O₃, etc. which cannot be covered with TiN and the steel, the rolling contact fatigue properties of the steel material are deteriorated due to the peeling.

As described above, many techniques taking notice on TiN formed at the interface between the oxide inclusions and the steel have conventionally been disclosed. However, all of them are directed to the Al deoxidized steel as described in the Patent Literature 3, and only disclose the technique of reducing the number density of harmful TiN to make it harmless. The method of the above-mentioned Patent Literature 3 cannot suppress the pealing harmful to the rolling contact fatigue properties, which occurs at the interface between the oxide inclusions and the steel.

In contrast to this, in the present invention, it is directed to the Si deoxidized steel, and deoxidized products which are liable to be coarsened, such as Al₂O₃, are not formed. Although the details are described later, the steel material of the present invention contains SiO₂ in a predetermined range, and deoxidized products satisfying CaO+Al₂O₃+SiO₂+TiO₂≥60% are formed. These deoxidized products are low in melting point, as compared to the deoxidized products formed by Al deoxidization, such as Al₂O₃, and hard to be aggregated in the molten steel to have a tendency of being difficult to be coarsened. Accordingly, even when TiN is formed using the deoxidized products formed by the Si deoxidization as the forming nuclei to form compound inclusions, the compound inclusions remain relatively fine. In addition, it is well known that TiN is excellent in lattice matching with α-Fe having a crystal structure of bcc. Accordingly, adhesion between the above-mentioned compound inclusions and the steel is improved by TiN. As a result, it is considered that peeling at the interface between the above-mentioned compound inclusions and the steel is suppressed. As a result, it has become clear that the rolling contact fatigue properties tend to be dramatically improved.

In order to ensure a predetermined amount of TiN, it is required that the retention time during heating performed before blooming, etc. is longer than before, as described above. In this point, in order to improve the rolling contact fatigue properties, the above-mentioned Patent Literature 4 focuses on maintaining the oxide inclusions obtained by the Si deoxidization in a state of an amorphous body, and the above-mentioned retention time during heating is the same as before and has not been taken into special consideration at all. For enhancing a level of the rolling contact fatigue properties in the above-mentioned Patent Literature 4, as a result of studies of the present inventors, it has become clear that when the above-mentioned retention time during heating is longer than before, TiN is formed at the interface between the above-mentioned oxide inclusions and the steel, and adhesion at the interface between the oxide inclusions and the steel is improved to suppress voids, thereby more improving the rolling contact fatigue properties, thus leading to completion of the present invention.

The bearing steel material of the resent invention is described below in detail. As described above, the bearing steel material excellent in the rolling contact fatigue properties according to the present invention has a feature in containing, on the mass% basis, from 0.8 to 1.1 % of C, from 0.15 to 0.8% of Si, from 0.1 to 1.0% of Mn, from 1.3 to 1.8% of Cr, more than 0% and 0.05% or less of P, more than 0% and 0.015% or less of S, from 0.0002 to 0.005% of Al, from 0.0002 to 0.002% of Ca, from 0.0005 to 0.010% of Ti, from 0.0030% to 0.010% of N, more than 0% and 0.0030% or less of O, and the balance being iron and unavoidable impurities, wherein oxide inclusions having a minor diameter of 1 µm or more contained in a steel satisfy the following requirements (1) and (2):
(1) an average composition thereof contains, on the mass% basis, from 10 to 50% of CaO, from 10 to 50% of Al₂O₃, from 20 to 70% of SiO₂, from 1.0 to 40% of TiO₂ and the balance being impurities, and satisfies CaO+Al₂O₃+SiO₂+TiO₂≥60%; and
(2) a number ratio of oxide inclusions in which TiN is formed at an interface between the oxide inclusions and the steel is 30% or more.

First, the components in the steel are explained.

### [C: 0.8 to 1.1%]

C is an essential element for increasing the quenching hardness and maintaining the strength at room temperature and high temperature, thereby imparting the wear resistance. In order to provide such effects, C is required to be incorporated in an amount of 0.8% or more. However, when the C content is excessively high beyond 1.1%, huge carbides are likely to be formed in a core portion of a bearing, which will adversely affect on the rolling contact fatigue properties. As the lower limit of the C content, it is preferably 0.85% or more, and more preferably 0.90% or more. In addition, as the upper limit of the C content, it is preferably 1.05% or less, and more preferably 1.0% or less.

### [Si: 0.15 to 0.8%]

Si effectively acts as a deoxidizing element, and also has a function of increasing the hardness by increasing quenching and temper-softening resistance. In order to effectively provide such effects, the Si content is required to be 0.15% or more. However, when the Si content is excessively high beyond 0.8%, not only the mold life is shortened during forging, but also it leads to increased cost. As the lower limit of the Si content, it is preferably 0.20% or more, and more preferably 0.25% or more. In addition, as the upper limit of the Si content, it is preferably 0.7% or less, and more preferably 0.6% or less.

### [Mn: 0.1 to 1.0%]

Mn is an element that improves the solid solution strengthening and the hardenability of a steel material matrix. When the Mn content is less than 0.1 %, the effect is not provided, and when the content is more than 1.0%, the content of MnO that is a lower oxide is increased to deteriorate the rolling contact fatigue properties and further to remarkably decrease the workability and machinability. As the lower limit of the Mn content, it is preferably 0.2% or more, and more preferably 0.3% or more. In addition, as the upper limit of the Mn content, it is preferably 0.8% or less, and more preferably 0.6% or less.

### [Cr: 1.3 to 1.8%]

Cr is an element that is effective for improving the strength and the wear resistance by improvement in the hardenability and formation of stable carbides, thereby effectively improving the rolling contact fatigue properties. In order to provide such an effect, the Cr content is required to be 1.3% or more. However, when the Cr content is excessively high beyond 1.8%, carbides become coarse to deteriorate the rolling contact fatigue properties and cutting property. As the lower limit of the Cr content, it is preferably 1.35% or more, and more preferably 1.4% or more. In addition, as the upper limit of the Cr content, it is preferably 1.7% or less, and more preferably 1.6% or less.

### [P: more than 0% and 0.05% or less]

P is an impurity element that segregates in a crystal grain interface and adversely affects on the rolling contact fatigue properties. In particular, when the P content is more than 0.05%, the rolling contact fatigue properties are remarkably deteriorated. Accordingly, it is required to restrict the P content to 0.05% or less. It is preferably 0.03% or less, and more preferably 0.02% or less. P is an impurity that is unavoidably contained in a steel material, and it is industrially difficult to reduce the amount thereof to 0%.

### [S: more than 0% and 0.015% or less]

S is an element that forms sulfides and when the content thereof is more than 0.015%, the rolling contact fatigue properties are deteriorated, since coarse sulfides remain. Accordingly, it is required to restrict the S content to 0.015% or less. From the view point of improving the rolling contact fatigue properties, the lower the S content is, the more desirable it is. It is preferably 0.007% or less, and more preferably 0.005% or less. S is an impurity that is unavoidably contained in a steel material, and it is industrially difficult to reduce the amount thereof to 0%.

### [Al: 0.0002 to 0.005%]

Al is a deoxidizing element, and it is required to control the Al content in order to control the average composition of the oxide inclusions. Since Si deoxidization is performed in the present invention, deoxidizing treatment by addition of Al after oxidation refining as in the case of the Al deoxidized steel is not performed. When the Al content is increased to more than 0.005%, hard oxides mainly including Al₂O₃ are formed in increased amounts and moreover remain as coarse oxides even after rolling down. Therefore, the rolling contact fatigue properties are deteriorated. Accordingly, as the upper limit of the Al content, it is defined as 0.005% or less. The Al content is preferably 0.002% or less, and more preferably 0.0015% or less. However, when the Al content is less than 0.0002%, the Al₂O₃ content in the oxides is excessively decreased to form oxide inclusions containing a large amount of SiO₂, resulting in deterioration of the rolling contact fatigue properties. Further, in order to control the Al content to less than 0.0002%, it is necessary to decrease the Al₂O₃ content not only as the component in the steel but also in the flux, for suppressing intrusion of Al. However, in the bearing steel that is a high carbon steel, the flux having a small Al₂O₃ content is extremely expensive and not economical. Accordingly, the lower limit of the Al content is 0.0002%. It is preferably 0.0003% or more, and more preferably 0.0005% or more.

### [Ca: 0.0002 to 0.002%]

Ca is effective for controlling the CaO content in oxides, thereby improving the rolling contact fatigue properties. In order to exert such an effect, the Ca content is defined as 0.0002% or more. However, when the Ca content is excessively high beyond 0.002%, the ratio of CaO in the oxide composition becomes too high, which causes coarsening of the oxides to deteriorate the rolling contact fatigue properties. Accordingly, the Ca content is defined as 0.002% or less. As the lower limit of the Ca content, it is preferably 0.0003% or more, and more preferably 0.0005% or more. In addition, as the upper limit of the Ca content, it is preferably 0.0015% or less, and more preferably 0.0010% or less.

### [Ti: 0.0005 to 0.010%]

Ti is an element characterizing the present invention. A predetermined amount of TiN is formed at the interface between the oxide inclusions and the steel by adding a predetermined amount of Ti, and peeling of the above-mentioned interface can be suppressed. As a result, the rolling contact fatigue properties are improved. Further, the TiO₂ concentration in the oxide inclusions can be controlled, which effectively acts for reducing the aspect ratio (the details are described later), thereby further improving the rolling contact fatigue properties. In order to obtain such effects, the Ti content is required to be 0.0005% or more. However, when the Ti content is increased to more than 0.010%, TiN is coarsened, and TiO₂ oxides are also coarsened, whereby the rolling contact fatigue properties are deteriorated. Accordingly, as the upper limit of the Ti content, it is defined as 0.010% or less. As the lower limit of the Ti content, it is preferably 0.0008% or more, and more preferably, 0.0011% or more. In addition, as the upper limit of the Ti content, it is preferably 0.0050% or less, and more preferably 0.0030% or less.

### [N: 0.0030 to 0.010%]

Similarly to Ti described above, N is also an element characterizing the present invention. TiN is formed at the interface between the oxide inclusions and the steel by adding a predetermined amount ofN, and can suppress peeling of the above-mentioned interface. As a result, the rolling contact fatigue properties are improved. In order to obtain such an effect, the N content is required to be 0.0030% or more. However, when the N content is increased to more than 0.010%, the rolling contact fatigue properties are deteriorated, since TiN is coarsened. Accordingly, as the upper limit of the N content, it is defined as 0.010% or less. As the lower limit of the N content, it is preferably 0.0035% or more, and more preferably, 0.004% or more. In addition, as the upper limit of the N content, it is preferably 0.008% or less, and more preferably 0.007% or less.

### [O: more than 0% and 0.0030% or less]

O is an undesirable impurity element. When the O content is increased to more than 0.0030%, coarse oxides become liable to be formed, and remain as coarse oxides also after hot rolling and cold rolling to adversely affect on the rolling contact fatigue properties. Accordingly, as the upper limit of the O content, it is defined as 0.0030% or less. In order to improve the rolling contact fatigue properties, it is preferred to decrease the O content as much as possible. For example, as the upper limit of the O content, it is preferably 0.0025% or less, and more preferably 0.0020% or less. From the viewpoint of improving the rolling contact fatigue properties, the lower limit of the O content is not particularly restricted. However, taking into consideration economical efficiency, etc., it is preferably 0.0004% or more, and more preferably 0.0008% or more. In order to control the O content to less than 0.0004%, O is required to be strictly removed from the molten steel. However, this is not economical because of the prolonged molten steel treatment time, etc.

The elements contained in the present invention are as described above, and the balance is iron and unavoidable impurities. As the above-mentioned unavoidable impurities, examples thereof include elements which are introduced depending on situations of raw materials, materials, manufacturing facilities, etc. For example, mixing of As, H, N, etc. may be allowed.

Then, the oxide inclusions present in the steel material are explained. As described above, the present invention has a feature in that the oxide inclusions having a minor diameter of 1 µm or more contained in the steel satisfy the following requirements (1) and (2):
(1) the average composition thereof contains, on the mass% basis, from 10 to 50% of CaO, from 10 to 50% of Al₂O₃, from 20 to 70% of SiO₂, from 1.0 to 40% of TiO₂ and the balance being impurities, and satisfies CaO+Al₂O₃+SiO₂+TiO₂≥60%; and
(2) the number ratio of oxide inclusions in which TiN is formed at the interface between the oxide inclusions and the steel is 30% or more.

In the present invention, the reason for taking notice particularly on the oxide inclusions having a minor diameter of 1 µm or more is as follows. That is, for the rolling contact fatigue properties, it is said that the larger the size of the oxide inclusions is, the larger the degree of an adverse influence is. Then, in order to evaluate the large-sized oxide inclusions which may adversely affect on the rolling contact fatigue properties, it has been decided to control the oxide inclusions having the above-mentioned size.

Description will be made below in order.

### [CaO: 10 to 50%]

CaO is effective for lowering the liquidus line temperature of oxides mainly composed of SiO₂. Accordingly, it has an effect of suppressing the oxides from being coarsened to form TiN at the interface between the oxide inclusions and the steel. As a result, the rolling contact fatigue properties are improved. Further, CaO has an effect of crystallizing the oxide inclusions. Accordingly, it plays an important role of reducing the aspect ratio of the oxide inclusions. Such effects are obtained by controlling the CaO content in the average composition of the oxide inclusions to 10% or more. However, when the CaO content is too high, the oxide inclusions are coarsened to deteriorate the rolling contact fatigue properties. Accordingly, as the upper limit thereof, it is required to be 50% or less. As the lower limit of the CaO content in the oxide inclusions, it is preferably 20% or more, and more preferably 25% or more. In addition, as the upper limit of the CaO content, it is preferably 45% or less, and more preferably 40% or less.

### [Al₂O₃: 10 to 50%]

Al₂O₃ has an effect of lowering the liquidus line temperature of oxides mainly composed of SiO₂. Accordingly, it has an effect of suppressing the oxides from being coarsened to form TiN at the interface between the oxide inclusions and the steel. As a result, the rolling contact fatigue properties are improved. Further, Al₂O₃ has an effect of crystallizing the oxide inclusions. Accordingly, it plays an important role of reducing the aspect ratio of the oxide inclusions. Such effects are obtained by controlling the Al₂O₃ content in the average composition of the oxide inclusions to 10% or more. On the other hand, when the Al₂O₃ content in the average composition of the oxide inclusions exceeds 50%, an Al₂O₃ (corundum) crystal phase precipitates, or a MgO-Al₂O₃ (spinel) crystal phase precipitates together with MgO, in the molten steel and the solidification process. These solid phases are hard and present as coarse inclusions, which tend to form voids during working to deteriorate the rolling contact fatigue properties. From such a view point, the Al₂O₃ content in the average composition of the oxide inclusions is required to be 50% or less. As the lower limit of the Al₂O₃ content in the oxide inclusions, it is preferably 20% or more, and more preferably 25% or more. In addition, as the upper limit of the Al₂O₃ content, it is preferably 45% or less, and more preferably 40% or less.

### [SiO₂: 20 to 70%]

SiO₂ has an effect of lowering the liquidus line temperature of the oxide inclusions. Accordingly, it has an effect of suppressing the oxides from being coarsened to form TiN at the interface between the oxide inclusions and the steel. As a result, the rolling contact fatigue properties are improved. In order to effectively provide such an effect, SiO₂ is required to be incorporated in an amount of 20% or more in the oxide inclusions. However, when the SiO₂ content exceeds 70%, the oxides are coarsened to deteriorate the rolling contact fatigue properties. Furthermore, since the oxides are elongated to increase the aspect ratio, the rolling contact fatigue properties are deteriorated. As the lower limit of the SiO₂ content in the oxide inclusions, it is preferably 25% or more, and more preferably 30% or more. In addition, as the upper limit of the SiO₂ content, it is preferably 60% or less, and more preferably 45% or less.

### [TiO₂: 1.0 to 40%]

TiO₂ has an effect of lowering the liquidus line temperature of oxides mainly composed of SiO₂. Accordingly, it has an effect of suppressing the oxides from being coarsened to form TiN at the interface between the oxide inclusions and the steel. As a result, the rolling contact fatigue properties are improved. Such an effect is obtained by controlling the TiO₂ content in the average composition of the oxide inclusions to 1.0% or more. However, when the TiO₂ content is too high, the oxides are coarsened to deteriorate the rolling contact fatigue properties. Accordingly, as the upper limit thereof, it is required to be 40% or less. As the lower limit of the TiO₂ content in the oxide inclusions, it is preferably 3% or more, and more preferably 5% or more. In addition, as the upper limit of the TiO₂ content, it is preferably 35% or less, and more preferably 30% or less.

### [CaO+Al₂O₃+SiO₂+TiO₂≥60%]

As described above, CaO, Al₂O₃, SiO₂ and TiO₂ are main components of the oxide inclusions in the present invention, and the respective contents are controlled. However, in the present invention, it is also necessary to further appropriately control the total amount thereof. The predetermined ratio of TiN is formed at the interface between the oxide inclusions and the steel to suppress peeling of the interface, thereby being capable of improving the rolling contact fatigue properties. When the above-mentioned total amount is less than 60%, the oxides are coarsened, and the above-mentioned interface control due to TiN is not sufficiently obtained to deteriorate the rolling contact fatigue properties. The larger the above-mentioned total amount is, the better result is obtained. As the lower limit thereof, it is preferably 65% or more, and more preferably 70% or more. The upper limit thereof is not particularly restricted, and for example, it may be 100%.

### [The number ratio of the oxide inclusions in which TiN is formed at the interface between the oxide inclusions and the steel (a base phase of the steel material) as the matrix is 30% or more based on whole of the oxide inclusions]

TiN formed at the above-mentioned interface means TiN formed at the interface between the oxide inclusions and the steel (a base phase of the steel material) as the matrix, as shown in the section of Examples to be described later. TiN is extremely important for improvement of the rolling contact fatigue properties, and the interface between the oxide inclusions and the steel as the matrix is suppressed from being peeled. As a result of suppressing surface peeling harmful for the rolling contact fatigue properties, the rolling contact fatigue properties are improved. In order to obtain such an effect, the number ratio of TiN formed at the above-mentioned interface is defined as 30% or more. The larger the above-mentioned number ratio of TiN is, the better result is obtained. As the lower limit thereof, it is preferably 40% or more, and more preferably 50% or more. The upper limit thereof is not particularly restricted, and for example, it may be 100%.

A method for measuring the number ratio of the above-mentioned oxide inclusions in which TiN is formed is described in detail in the section of Examples to be described later.

The oxides contained in the steel material of the present invention are composed of CaO, Al₂O₃, SiO₂ and TiO₂, and the balance is impurities. As the impurities in the oxide inclusions, examples thereof include impurities unavoidably contained in the manufacturing process, etc. The impurities can be contained to such an extent that desired properties are obtained without having adverse effects on the crystallization state, the aspect ratio or the like of the oxide inclusions. It is preferably controlled as the whole impurities (total amount) to about 20% or less. Specifically, for example, it is possible to contain REM₂O₃, MgO, MnO, ZrO₂, Na₂O, K₂O, Li₂O, Cr₂O₃, NbO, FeO, Fe₃O₄ and Fe₂O₃, respectively, in a range of about 10% or less. In the present invention, REM means to include lanthanoid elements (15 elements from La to Lu), Sc (scandium) and Y (yttrium). Of these elements, at least one element selected from the group consisting of La, Ce and Y is preferably contained, and La and/or Ce are more preferably contained.

Further, in the present invention, the average of the aspect ratio (major diameter/minor diameter) (hereinafter sometimes simply referred to as the aspect ratio) of the oxide inclusions present on a surface cross sectioned in parallel with the longitudinal direction of the above-mentioned steel material is decreased to 3.0 or less by properly controlling the components in the steel and the oxide composition as described above. Thus, the rolling contact fatigue properties can be stably improved irrespective of a load exerting direction. The smaller the above-mentioned aspect ratio is, the better result is obtained, and it is preferably about 2.5 or less, and more preferably 2.0 or less.

A method for measuring the aspect ratio is described in detail in the section of Examples to be described later.

Then, a method for manufacturing the steel material is explained. In the present invention, the steel material may be manufactured particularly taking notice on each step of the melting step and further the hot working step, particularly so as to obtain the predetermined oxide composition. For the other steps, methods used usually for the manufacture of bearing steels can be properly selected and used.

A preferred melting method for obtaining the above-mentioned oxide composition is as described below.

First, when the steel material is melted, deoxidization by Si addition is performed without performing the deoxidizing treatment by Al addition which has been usually performed. During this melting, in order to control the respective contents of CaO and Al₂O₃, the Al content contained in the steel is controlled to 0.0002 to 0.005% as described above, and the Ca content is controlled to 0.0002 to 0.002% as described above.

In addition, a preferred method for controlling TiN is as follows. First, Ti and N may be added so as to control the Ti content contained in the steel within a range of 0.0005 to 0.010% as described above and the N content within a range of 0.0030 to 0.010% as described above, during melting in accordance with an ordinary method. A method for adding Ti is not particularly restricted. For example, adjustment may be performed by adding a Ti-containing ferrous alloy, or the Ti concentration in the molten steel may be controlled by control of a slug composition. A method for adding N is not also particularly restricted. Adjustment may be performed by adding a N-containing ferrous alloy, control may be performed by using nitrogen when the molten steel is gas stirred, or the nitrogen partial pressure in a gas phase in contact with the molten steel may be controlled.

Further, in order to form a predetermined amount of TiN at the interface between the oxide inclusions and the steel, it is effective to control the retention time to be equal to or more than a certain time, when heating (about 700 to 1300°C) is performed before at least any step of blooming, blooming forging and hot rolling. For example, it is effective to control the retention time during heating performed before blooming or blooming forging to be longer than the conventional time (about 1 to 1.5 hours), to about 2.0 hours or more. The longer the retention time is, the better result is obtained. For example, it is preferably 2.5 hours or more, and more preferably 3.0 hours or more. Although the upper limit thereof is not particularly restricted, it is preferably controlled to about 20.0 hours or less, taking into consideration production efficiency, etc. For the range of the above-mentioned retention time, since the retention temperature is different depending on each step, it is recommended to set a preferred retention time corresponding to the retention temperature.

In addition, a method for controlling TiO₂ is not particularly restricted, and Ti may be added in such a manner that the Ti content contained in the steel is controlled within a range from 0.0005 to 0.010% as described above, during melting, based on the method usually used in the relevant technical field. The method for adding Ti is not particularly restricted. For example, adjustment may be performed by adding the Ti-containing ferrous alloy, or the Ti concentration in the molten steel may be controlled by control of the slug composition.

SiO₂ is obtained by controlling other oxides as described above.

In the present invention, in accordance with an ordinary method, after the steel material controlled to the chemical component composition as described above is subjected to rolling and spheroidization annealing, hot working or cold working is performed.

After the steel material of the present invention is thus obtained, it is formed into a predetermined shape of a part, and quenched and tempered to obtain a bearing part of the present invention. Examples of the configuration in a state of the steel material includes either linear or bar-like shape applicable to such manufacture, and the size thereof can also be appropriately determined depending on final products.

Examples of the bearing parts described above include, for example, rollers, needles, balls, races, etc.

The present invention is described more specifically below by way of examples, but the present invention is not restricted by the following examples and it is possible to make changes without departing from the spirit described above and later, all of which are included in the technical scope of the present invention.

### Examples

### (1) Production of cast slabs

Test steels of various chemical component compositions shown in the following Table 1 (the balance being iron and unavoidable impurities) were melted by using a small-size melting furnace (capacity: 170 kg/l ch) to prepare cast slabs (slab upper part diameter: 245 mm, slab lower part diameter: 210 mm, slab height: 480 mm). During the melting, a cradle of a MgO refractory was used, and the amount of dissolved oxygen was adjusted by using C, Si, Mn and Cr, without performing Al deoxidizing treatment usually applied. Thereafter, a Ti source and a Ca source were added in this order to control the Ti content and the Ca content, except for some examples described below.

In steel material No. 49, deoxidizing treatment by Al addition was performed for comparison. Further, in steel material No. 36, a Mg alloy was added together with the addition of the Ca source. As a result, in steel material No. 36, the MgO concentration of oxide inclusions is increased to decrease the total amount of CaO+Al₂O₃+SiO₂+TiO₂ as shown in Table 2. At this time, the content of MgO in the oxide inclusions was adjusted using a MgO-containing refractory in a melting furnace, a refining vessel, a carrying vessel or the like during the melting. The MgO content in the oxide inclusions was adjusted, for example, by adjusting the melting time after the alloy addition.

In this example, a Ni-Ca alloy was used as the above-mentioned Ca source, and a Fe-Ti alloy was used as the above-mentioned Ti source, respectively. In addition, N was adjusted by controlling the nitrogen partial pressure in the atmosphere and adding manganese nitride before adding the Ti source.

### (2) Production of rolled material

The cast slabs thus obtained were heated in a heating furnace at a temperature of 1100 to 1300°C, and kept in this temperature region (retention temperature region) for the "heating furnace retention time" described in Table 2, followed by blooming at a temperature of 900 to 1200°C. In this example, in order to form a predetermined amount of TiN at the interface between the oxide inclusions and the steel, the cast slabs were kept under heating for 2.0 hours or more in the above-mentioned heating furnace for heating the cast slabs. Then, they were heated in the heating furnace at a temperature of 830 to 1200°C, and the steel material was kept for 1.0 hour. Thereafter, hot rolling was performed at a temperature of 830 to 1100°C to obtain a hot rolled material having a diameter of 65 mm.

### (3) Preparation of test pieces for measuring the average composition of oxide inclusions and determination of the average composition

After heating the above-mentioned hot rolled material at a temperature of 760 to 800°C for 2 to 8 hours, it was cooled to a temperature of (Ar₁ transformation point - 60°C) at a cooling rate of 10 to 15°C/hour and then allowed to be cooled in atmospheric air (spheroidization annealing) to obtain a spheroidized annealed material in which spheroidized cementite was dispersed. Test pieces of 60 mm in diameter and 30 mm in thickness were cut out from the spheroidized annealed material thus obtained, oil-quenched after heating at a temperature of 840°C for 30 minutes and then tempered at a temperature of 160°C for 120 minutes to prepare test pieces for measuring the average composition of oxide inclusions.

For each test piece thus obtained, one micro specimen of 20 mm × 20 mm was cut out from a surface cross sectioned in parallel with the rolling direction at a 1/4 position of the diameter D, and a cross section thereof was polished. The polished surface was observed by using an electron beam micro probe X-ray analyzer (Electron Probe X-ray Micro Analyzer: EPMA, trade name "JXA8500F") manufactured by JEOL DATUM, and the component composition of oxide inclusions with a minor diameter of 1 µm or more was quantitatively analyzed. At this time, the observation area was 100 mm² (polished surface), and the component composition at the central portion of the oxide inclusions was quantitatively analyzed by wavelength dispersible spectrometry of characteristic X-rays. Elements as the target of analysis were Ca, Al, Si, Ti, Ce, La, Mg, Mn, Zr, Na, K, Cr and O (oxygen), and a relation between the X-ray intensity and the element density of each element was previously determined as a calibration curve by using a known substance. The amount of the element contained in each micro specimen was determined from the X-ray intensity obtained from the above-mentioned oxide inclusions as the target of analysis and the calibration curve, and the average composition of the inclusions was determined by arithmetically averaging the results. Of these quantitative determination results thus obtained, inclusions having an oxygen content of 5% or more were defined as oxides. At this time, when a plurality of elements were observed from one inclusion, conversion to a single oxide of each element was performed from the ratio of the X-ray intensities showing existence of those elements to calculate the composition of the oxide. In the present invention, values converted to mass as the above-mentioned single oxides were averaged to obtain the average composition of the oxides. The REM oxides are present in forms of M₂O₃, M₃O₅, MO₂, etc. in the steel material, when the metal element is represented by M. However, in the present invention, all oxides observed were converted to M₂O₃ to calculate the average composition of the REM oxides.

### (4) Determination of the aspect ratio of oxide inclusions

Using the above-mentioned test piece for measuring the average composition of the oxide inclusions, 100 oxide inclusions (elements as the target of analysis: Ca, Al, Si, Ti, Ce, La, Mg, Mn, Zr, Na, K, Cr and O (oxygen)) each having a minor diameter of 1 µm or more were optionally selected. The major diameter and the minor diameter were measured for each of them to calculate the aspect ratio (= major diameter/minor diameter) of each oxide inclusion. The average aspect ratio of the oxide inclusions was determined by arithmetically averaging the results.

### (5) Measurement of the number ratio of the oxide inclusions in which TiN is formed at the interface between the oxide inclusions and the steel

Using the above-mentioned test piece for measuring the average composition of the oxide inclusions, for an observation area of 100 mm² (polished surface), first, 5 oxide inclusions (elements as the target of analysis: Ca, Al, Si, Ti, Ce, La, Mg, Mn, Zr, Na, K, Cr and O (oxygen), and inclusions having an oxygen content of 5% or more) each having a minor diameter of 1 µm or more were selected by using an electron beam micro probe X-ray analyzer. For the selection criterion of the 5 oxide inclusions, 5 inclusions were selected successively from one largest in size of the oxide inclusions present in the observation area of 100 mm². The reason for selecting the oxide inclusions largest in size is that it is said that the larger in size the oxide inclusions is, the more adversely the rolling contact fatigue properties are affected. The size of the oxide inclusions was compared by the area of the oxide inclusions appearing on the above-mentioned observation surface. Then, the oxide inclusions as the target were thinned by a FIB method (focused ion beam processing method) to such a thickness that TEM observation is possible. A focused ion beam processing observation apparatus FB2000A manufactured by Hitachi, Ltd. was used as an apparatus, the accelerating voltage was 30 kV, and Ga was used as an ion source. Thereafter, the thinned oxide inclusions were subjected to TEM observation. A field emission type transmission electron microscope JEM-2010F manufactured by JEOL Ltd. was used as an apparatus, and EDX analysis was performed to the interface between the oxide inclusions and the steel by an EDX (energy dispersive X-ray spectrometry) analyzer, Vantage, manufactured by Noran. The elements as the target of analysis were Ca, Al, Si, Ti, Ce, La, Mg, Mn, Zr, Na, K and Cr, and phases having a Ti concentration of 30% or more were selected. To the phases, identification analysis by electron beam diffraction was performed, and one showing a cubic crystal structure was judged as TiN. At this time, when TiN was formed at the interface between the oxide inclusions as the target and the steel (the interface between the oxide inclusions and the steel (the base phase of the steel material) as the matrix) (that is, when the presence of TiN was recognized by the above-mentioned method for judging as TiN), it was judged that the oxide inclusions in which TiN was formed at the interface between the oxide inclusions and the steel were present, and the number ratio of the above-mentioned oxide inclusions in which TiN was formed, which were present among the 5 oxide inclusions measured, was measured.

### (6) Production of thrust rolling contact fatigue test pieces and rolling contact fatigue test

Test pieces of 60 mm in diameter and 6 mm in thickness were cut out from the spheroidize-annealed material obtained in (3) described above, oil-quenched after heating at a temperature of 840°C for 30 minutes and then tempered at a temperature of 160°C for 120 minutes. Finally, finish polishing was applied to prepare thrust rolling contact fatigue test pieces with a surface roughness Ra of 0.04 µm or less. Using the thrust rolling contact fatigue test pieces thus obtained, a thrust rolling contact fatigue test was performed by a thrust fatigue tester (thrust type rolling contact fatigue tester "FJ-5T" manufactured by Fuji Testing Machine Corporation) under conditions of a load speed of 1200 rpm, a steel sphere number of 3, a surface pressure of 5.24 GPa and a number of times of interruption of 200,000,000.

As a measure for rolling contact fatigue life, fatigue life L₁₀ (the number of stress repetition until fatigue fracture at a cumulative fracture probability of 10%, hereinafter sometimes referred to as "L₁₀ life") is usually used. Specifically, L₁₀ means the number of repetition until fatigue fracture at a cumulative fracture probability of 10% obtained by plotting the test results on Weibull probability paper (see "Bearing", Iwanami Zensho, written by Norimune Soda). The test described above was performed using 16 specimens for each steel material to determine the L₁₀ life. Then, the life ratio of the L₁₀ life of each steel material to the L₁₀ life (1.2×10⁷ cycles) of steel material No. 49 of a conventional steel was determined, and evaluated by the following criteria:
Poor (poor in rolling contact fatigue life): less than 5.4×10⁷ cycles in L₁₀ life (less than 4.5 times in life ratio)
Fair (excellent in rolling contact fatigue life): from 5.4×10⁷ cycles to less than 6.0×10⁷ cycles in L₁₀ life (from 4.5 times to less than 5.0 times in life ratio)
Good (particularly excellent in rolling contact fatigue life): from 6.0×10⁷ cycles to less than 6.5×10⁷ cycles in L₁₀ life (from 5.0 times to less than 5.4 times in life ratio)
Excellent (especially excellent in rolling contact fatigue life): 6.5×10⁷ cycles or more in L₁₀ life (5.4 times or more in life ratio)

The life ratio (4.5 times or more) of "fair" that is the minimum level of the above-mentioned acceptance criteria exceeds those of test No. 11 and test No. 35 (life ratio: 3.5 times) in Table 2, which provide the highest life ratio in the example of the Patent Literature 4 described above, and in this example, the acceptance criteria higher than in the Patent Literature 4 described above are set.

These results are described in Table 2. Test No. in Table 2 indicates that a steel material having the same number as steel material No. in Table 1 is used. Further, in the table, "E+07" means "×10⁷", and "E+06" means "×10⁶".

**[Table 1A]**

| Steel Material No. | Component in steel (mass%, balance: iron and unavoidable impurities) | | | | | | | | | | |
|---|---|---|---|---|---|---|---|---|---|---|---|
| | C | Si | Mn | Cr | P | S | Al | Ca | Ti | N | O |
| 1 | 1.15 | 0.30 | 0.36 | 1.5 | 0.015 | 0.003 | 0.0010 | 0.0006 | 0.0021 | 0.0054 | 0.0018 |
| 2 | 0.96 | 0.27 | 1.12 | 1.5 | 0.010 | 0.003 | 0.0007 | 0.0010 | 0.0013 | 0.0060 | 0.0015 |
| 3 | 0.90 | 0.30 | 0.41 | 1.9 | 0.014 | 0.003 | 0.0007 | 0.0007 | 0.0020 | 0.0054 | 0.0015 |
| 4 | 0.92 | 0.26 | 0.39 | 1.2 | 0.011 | 0.003 | 0.0005 | 0.0009 | 0.0011 | 0.0045 | 0.0010 |
| 5 | 0.97 | 0.25 | 0.43 | 1.5 | 0.057 | 0.004 | 0.0008 | 0.0008 | 0.0012 | 0.0052 | 0.0010 |
| 6 | 0.96 | 0.27 | 0.36 | 1.5 | 0.013 | 0.017 | 0.0012 | 0.0009 | 0.0025 | 0.0069 | 0.0018 |
| 7 | 0.98 | 0.26 | 0.38 | 1.6 | 0.013 | 0.004 | 0.0058 | 0.0006 | 0.0017 | 0.0058 | 0.0013 |
| 8 | 0.90 | 0.30 | 0.37 | 1.6 | 0.016 | 0.004 | 0.0035 | 0.0006 | 0.0028 | 0.0054 | 0.0017 |
| 9 | 0.93 | 0.30 | 0.35 | 1.5 | 0.015 | 0.003 | 0.0021 | 0.0009 | 0.0019 | 0.0056 | 0.0018 |
| 10 | 0.95 | 0.25 | 0.44 | 1.5 | 0.014 | 0.003 | 0.0009 | 0.0009 | 0.0020 | 0.0064 | 0.0012 |
| 11 | 0.96 | 0.25 | 0.40 | 1.6 | 0.015 | 0.003 | 0.0004 | 0.0006 | 0.0024 | 0.0052 | 0.0012 |
| 12 | 0.93 | 0.28 | 0.38 | 1.5 | 0.015 | 0.004 | 0.0002 | 0.0009 | 0.0021 | 0.0066 | 0.0012 |
| 13 | 0.93 | 0.27 | 0.35 | 1.5 | 0.011 | 0.004 | 0.0001 | 0.0001 | 0.0001 | 0.0040 | 0.0017 |
| 14 | 0.96 | 0.27 | 0.43 | 1.6 | 0.011 | 0.004 | 0.0003 | 0.0024 | 0.0005 | 0.0059 | 0.0018 |
| 15 | 0.96 | 0.28 | 0.42 | 1.5 | 0.012 | 0.005 | 0.0007 | 0.0017 | 0.0014 | 0.0046 | 0.0014 |
| 16 | 0.97 | 0.30 | 0.36 | 1.5 | 0.013 | 0.003 | 0.0005 | 0.0013 | 0.0024 | 0.0045 | 0.0012 |
| 17 | 0.98 | 0.28 | 0.33 | 1.6 | 0.014 | 0.004 | 0.0010 | 0.0008 | 0.0014 | 0.0056 | 0.0010 |
| 18 | 0.90 | 0.25 | 0.43 | 1.5 | 0.011 | 0.004 | 0.0014 | 0.0004 | 0.0020 | 0.0061 | 0.0014 |
| 19 | 0.98 | 0.25 | 0.39 | 1.5 | 0.015 | 0.005 | 0.0012 | 0.0002 | 0.0016 | 0.0054 | 0.0011 |
| 20 | 0.98 | 0.30 | 0.37 | 1.6 | 0.017 | 0.005 | 0.0014 | 0.0001 | 0.0011 | 0.0041 | 0.0012 |
| 21 | 0.94 | 0.27 | 0.40 | 1.6 | 0.018 | 0.004 | 0.0003 | 0.0002 | 0.0105 | 0.0059 | 0.0011 |
| 22 | 0.97 | 0.26 | 0.42 | 1.6 | 0.017 | 0.004 | 0.0007 | 0.0006 | 0.0043 | 0.0050 | 0.0011 |
| 23 | 0.97 | 0.27 | 0.37 | 1.5 | 0.018 | 0.004 | 0.0014 | 0.0007 | 0.0015 | 0.0048 | 0.0017 |
| 24 | 0.92 | 0.29 | 0.32 | 1.5 | 0.015 | 0.005 | 0.0007 | 0.0006 | 0.0009 | 0.0047 | 0.0012 |
| 25 | 0.93 | 0.29 | 0.32 | 1.6 | 0.018 | 0.005 | 0.0005 | 0.0008 | 0.0004 | 0.0067 | 0.0016 |
| 26 | 0.90 | 0.30 | 0.34 | 1.5 | 0.018 | 0.003 | 0.0012 | 0.0006 | 0.0028 | 0.0105 | 0.0013 |

**[Table 1B]**

| Steel Material No. | Component in steel (mass%, balance: iron and unavoidable impurities) | | | | | | | | | | |
|---|---|---|---|---|---|---|---|---|---|---|---|
| | C | Si | Mn | Cr | P | S | Al | Ca | Ti | N | O |
| 27 | 0.93 | 0.27 | 0.36 | 1.5 | 0.014 | 0.005 | 0.0012 | 0.0007 | 0.0020 | 0.0073 | 0.0017 |
| 28 | 0.95 | 0.29 | 0.43 | 1.6 | 0.015 | 0.005 | 0.0013 | 0.0007 | 0.0028 | 0.0063 | 0.0010 |
| 29 | 0.92 | 0.26 | 0.39 | 1.5 | 0.014 | 0.005 | 0.0011 | 0.0007 | 0.0025 | 0.0038 | 0.0015 |
| 30 | 0.95 | 0.28 | 0.34 | 1.5 | 0.013 | 0.005 | 0.0005 | 0.0009 | 0.0026 | 0.0029 | 0.0012 |
| 31 | 0.98 | 0.25 | 0.33 | 1.6 | 0.015 | 0.005 | 0.0008 | 0.0010 | 0.0029 | 0.0057 | 0.0035 |
| 32 | 0.91 | 0.29 | 0.32 | 1.5 | 0.017 | 0.004 | 0.0005 | 0.0009 | 0.0026 | 0.0057 | 0.0023 |
| 33 | 0.90 | 0.30 | 0.34 | 1.6 | 0.018 | 0.005 | 0.0012 | 0.0006 | 0.0011 | 0.0055 | 0.0018 |
| 34 | 0.93 | 0.30 | 0.37 | 1.6 | 0.017 | 0.004 | 0.0005 | 0.0005 | 0.0015 | 0.0053 | 0.0014 |
| 35 | 0.92 | 0.26 | 0.44 | 1.5 | 0.015 | 0.003 | 0.0013 | 0.0005 | 0.0025 | 0.0055 | 0.0012 |
| 36 | 0.94 | 0.30 | 0.35 | 1.5 | 0.015 | 0.005 | 0.0011 | 0.0009 | 0.0013 | 0.0062 | 0.0015 |
| 37 | 0.91 | 0.29 | 0.33 | 1.6 | 0.015 | 0.004 | 0.0009 | 0.0010 | 0.0021 | 0.0040 | 0.0010 |
| 38 | 0.98 | 0.27 | 0.40 | 1.5 | 0.011 | 0.003 | 0.0008 | 0.0007 | 0.0025 | 0.0052 | 0.0015 |
| 39 | 0.91 | 0.27 | 0.37 | 1.6 | 0.017 | 0.005 | 0.0012 | 0.0005 | 0.0014 | 0.0040 | 0.0018 |
| 40 | 0.96 | 0.30 | 0.37 | 1.5 | 0.018 | 0.005 | 0.0006 | 0.0009 | 0.0021 | 0.0066 | 0.0012 |
| 41 | 0.94 | 0.25 | 0.43 | 1.6 | 0.010 | 0.005 | 0.0012 | 0.0008 | 0.0022 | 0.0060 | 0.0010 |
| 42 | 0.93 | 0.29 | 0.43 | 1.6 | 0.017 | 0.004 | 0.0002 | 0.0003 | 0.0005 | 0.0049 | 0.0015 |
| 43 | 0.94 | 0.26 | 0.38 | 1.6 | 0.015 | 0.004 | 0.0005 | 0.0005 | 0.0011 | 0.0044 | 0.0011 |
| 44 | 0.93 | 0.26 | 0.33 | 1.5 | 0.012 | 0.003 | 0.0007 | 0.0009 | 0.0016 | 0.0052 | 0.0014 |
| 45 | 0.93 | 0.25 | 0.37 | 1.5 | 0.014 | 0.004 | 0.0009 | 0.0008 | 0.0013 | 0.0050 | 0.0010 |
| 46 | 0.96 | 0.26 | 0.36 | 1.6 | 0.014 | 0.005 | 0.0012 | 0.0009 | 0.0010 | 0.0060 | 0.0015 |
| 47 | 0.91 | 0.27 | 0.42 | 1.5 | 0.013 | 0.004 | 0.0019 | 0.0008 | 0.0012 | 0.0055 | 0.0015 |
| 48 | 0.90 | 0.25 | 0.39 | 1.5 | 0.017 | 0.004 | 0.0006 | 0.0008 | 0.0011 | 0.0049 | 0.0010 |
| 49 | 0.97 | 0.20 | 0.47 | 1.5 | 0.012 | 0.005 | 0.0215 | 0.0000 | 0.0008 | 0.0065 | 0.0007 |

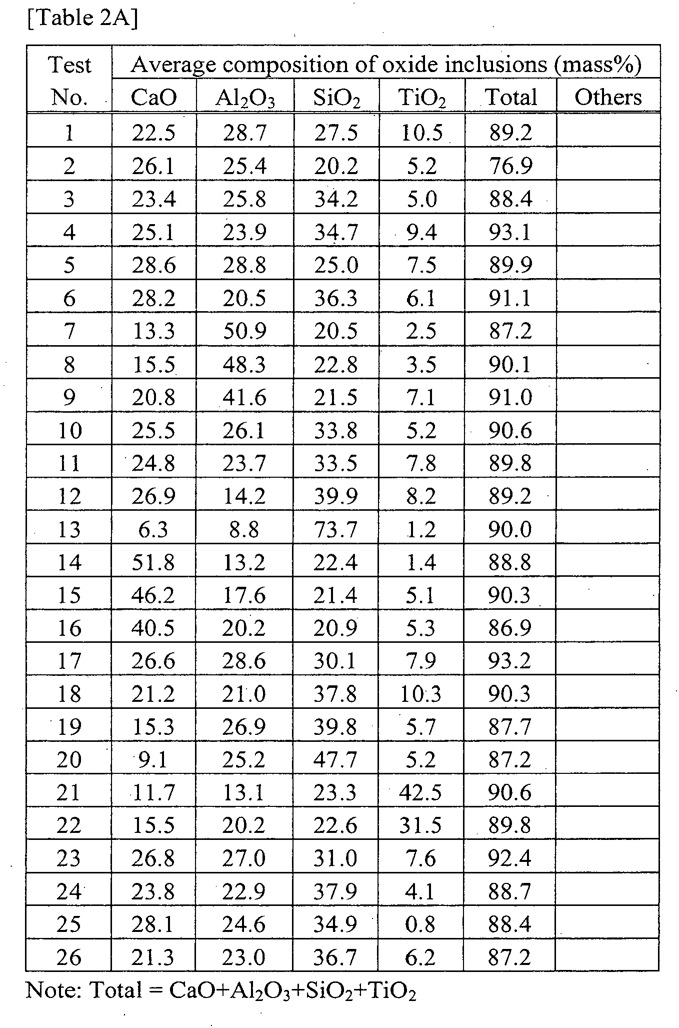

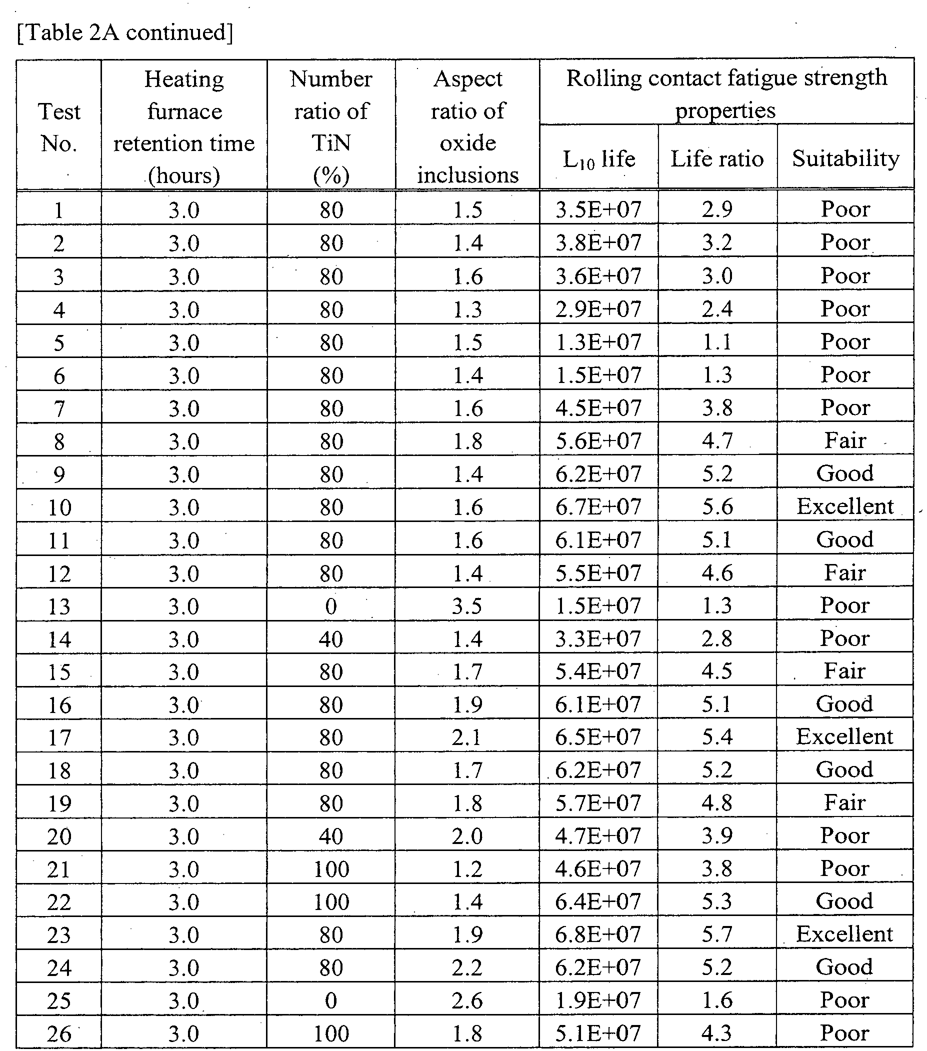

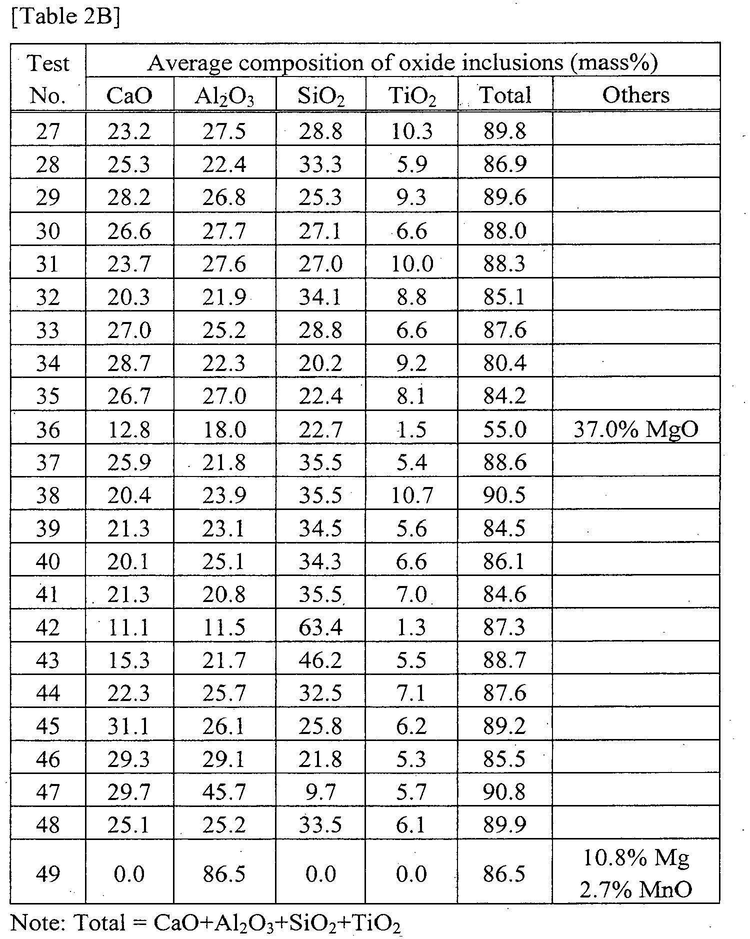

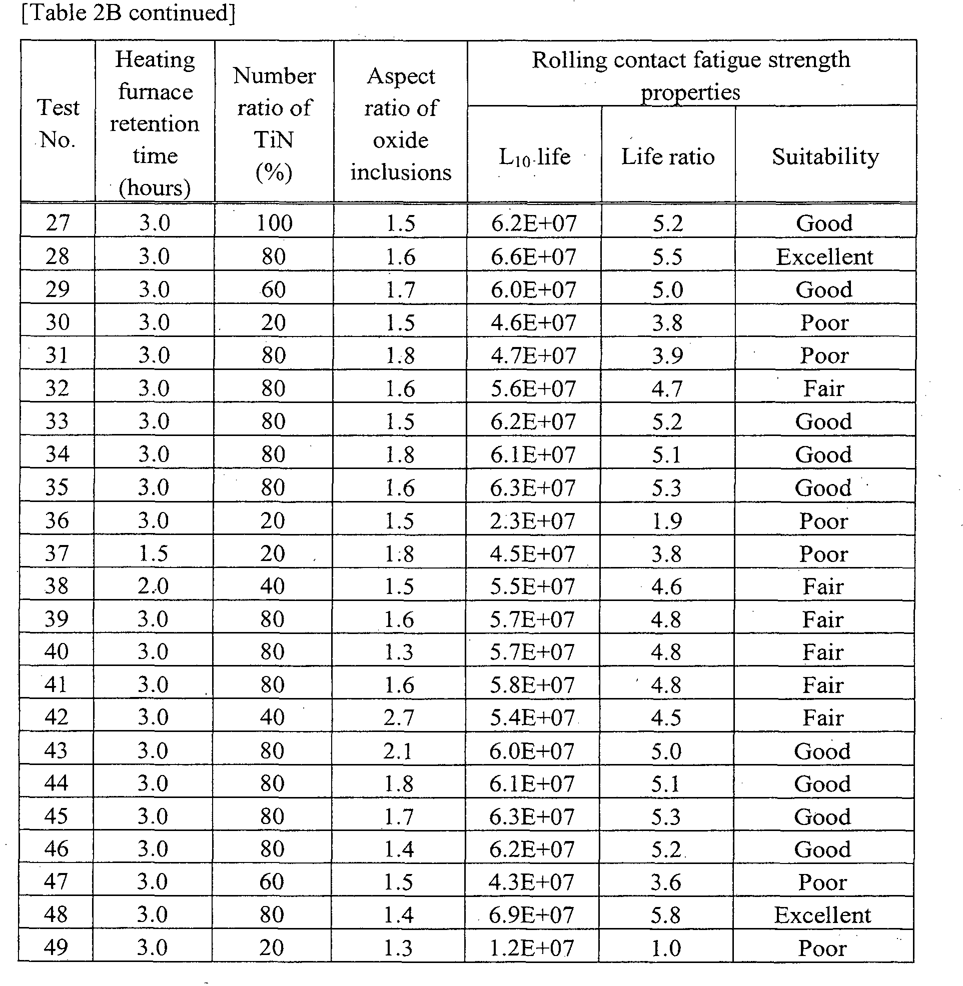

From these results, consideration can be made as follows.

First, all of test Nos. 8 to 12, 15 to 19, 22 to 24, 27 to 29, 32 to 35, 38 to 46 and 48 in Table 2 are examples satisfying the chemical component composition (chemical component composition and oxide composition of the steel material) and the number ratio of TiN defined in the present invention, and the aspect ratio of the oxide inclusions is also appropriately controlled. Accordingly, it can be seen that they are excellent in the rolling contact fatigue life.

In these examples, the rolling contact fatigue properties are measured in the thrust direction. However, since the steel material of the present invention has a small aspect ratio, it is assumed that the rolling contact fatigue properties in the radial direction are also satisfactory.

On the contrary, since any one of the requirements of the present invention is not satisfied in the following test Nos., the rolling contact fatigue properties were deteriorated.

Test No. 1 is an example of using steel material No. 1 in Table 1 having a high C content in the steel, test No. 2 is an example of using steel material No. 2 in Table 1 having a high Mn content in the steel, test No. 3 is an example of using steel material No. 3 in Table 1 having a high Cr content in the steel, test No. 4 is an example of using steel material No. 4 in Table 1 having a low Cr content in the steel, test No. 5 is an example of using steel material No. 5 in Table 1 having a high P content in the steel, and test No. 6 is an example of using steel material No. 6 in Table 1 having a high S content in the steel. In all of them, the rolling contact fatigue properties were deteriorated.

Test No. 7 is an example of using steel material No. 7 in Table 1 having an excessive Al content, in which the Al₂O₃ content in the oxide was increased, and the rolling contact fatigue properties were deteriorated.

On the other hand, test No. 13 is an example of using steel material No. 13 in Table 1 which is insufficient in the Al content, the Ca content and the Ti content. In test No. 13 described above, all of oxides of Al, Ca and Ti were out of the range defined in the present invention, TiN was not formed, and the aspect ratio of the oxide inclusions was also out of the range. Accordingly, the rolling contact fatigue properties were deteriorated.

Test No. 14 is an example of using steel material No. 14 in Table 1 having a high Ca content, in which the CaO content in the oxides was high, and the rolling contact fatigue properties were deteriorated.

On the other hand, test No. 20 is an example of using steel material No. 20 in Table 1 having a low Ca content, in which the CaO content in the oxides was low, and the rolling contact fatigue properties were deteriorated.

Test No. 21 is an example of using steel material No. 21 in Table 1 having a high Ti content, in which the TiO₂ content in the oxides was high, and the rolling contact fatigue properties were deteriorated.

On the other hand, test No. 25 is an example of using steel material No. 25 in Table 1 having a low Ti content, in which the TiO₂ content in the oxides was low, and TiN was also not formed. Accordingly, the rolling contact fatigue properties were deteriorated.

Test No. 26 is an example of using steel material No. 26 in Table 1 having a high N content, and the rolling contact fatigue properties were deteriorated.

Test No. 30 is an example of using steel material No. 30 in Table 1 having a low N content. Since the predetermined TiN was not formed, the rolling contact fatigue properties were deteriorated.

Test No. 31 is an example of using steel material No. 30 in Table 1 having a high O content, and the rolling contact fatigue properties were deteriorated.

Test No. 36 is an example of using steel material No. 36 in Table 1 having a low total amount of (CaO+Al₂O₃+SiO₂+TiO₂). Since the predetermined TiN was not formed, the rolling contact fatigue properties were deteriorated.

Test No. 37 is an example in which the retention time in the heating furnace is short. Since the predetermined TiN was not formed, the rolling contact fatigue properties were deteriorated.

In test No. 47, since the melting time was long in a state where the Al concentration was relatively high, a redox reaction between Al in the molten steel and SiO₂ in the oxide inclusions proceeded, and the SiO₂ content was insufficient. Accordingly, the rolling contact fatigue properties were deteriorated.

Test No. 49 is an example of using steel material No. 49 (conventional aluminum-killed steel) in Table 1 obtained by the Al deoxidizing treatment. Since the Al content was excessive to cause an extremely high Al₂O₃ content in the oxides, the desired TiO₂, etc. were not formed at all, and the predetermined TiN was also not formed. Accordingly, the rolling contact fatigue properties were deteriorated.

While the present invention has been described specifically and with reference to specific embodiments, it will be apparent to a person skilled in the art that various modifications or changes can be made without departing from the spirit and scope of the present invention.

The present application is based on Japanese Patent Application No. 2015-011560 filed on January 23, 2015, the contents of which are incorporated herein by reference.

### Industrial Applicability

The bearing steel material of the present invention has excellent rolling contact fatigue properties, and is useful as rolling elements for bearings, such as rollers, needles, balls and races.

## Claims

1. A bearing steel material excellent in rolling contact fatigue properties, comprising, on the mass% basis:
from 0.8 to 1.1% of C;
from 0.15 to 0.8% of Si;
from 0.1 to 1.0% of Mn;
from 1.3 to 1.8% of Cr;
more than 0% and 0.05% or less of P;
more than 0% and 0.015% or less of S;
from 0.0002 to 0.005% of Al;
from 0.0002 to 0.002% of Ca;
from 0.0005 to 0.010% of Ti;
from 0.0030% to 0.010% of N;
more than 0% and 0.0030% or less of O; and
the balance being iron and unavoidable impurities,
wherein oxide inclusions having a minor diameter of 1 µm or more contained in a steel satisfy the following requirements (1) and (2):
(1) an average composition thereof contains, on the mass% basis, from 10 to 50% of CaO, from 10 to 50% of Al₂O₃, from 20 to 70% of SiO₂, from 1.0 to 40% of TiO₂ and the balance being impurities, and satisfies CaO+Al₂O₃+SiO₂+TiO₂≥60%; and
(2) a number ratio of oxide inclusions in which TiN is formed at an interface between the oxide inclusions and the steel is 30% or more based on a whole of the oxide inclusions.

2. The bearing steel material according to claim 1, wherein an average of an aspect ratio (major diameter/minor diameter) of the oxide inclusions present on a surface cross sectioned in parallel with a longitudinal direction of the steel material is restricted to 3.0 or less.

3. A bearing part which is formed of the bearing steel material according to claim 1 or 2.
